# EUROPÄISCHE PATENTSCHRIFT

(11) **EP 3 452 392 B1**
(45) Veröffentlichungstag und Bekanntmachung des Hinweises auf die Patenterteilung: **01.06.2022**
(21) Anmeldenummer: 17722007.6
(22) Anmeldetag: 04.05.2017
(51) Int. Cl.: B65G 23/00

(54) **TRANSFERVORRICHTUNG ZUM TRANSFER VON STÜCKGÜTERN**
TRANSFER APPARATUS FOR TRANSFERRING ARTICLES
DISPOSITIF DE TRANSFERT SERVANT AU TRANSFERT DE MARCHANDISES DE DÉTAIL

(30) Priorität: 06.05.2016 DE 102016108449
(43) Veröffentlichungstag der Anmeldung: 13.03.2019
(73) Patentinhaber: Bleichert Automation Gmbh&Co. KG, 74706 Osterburken (DE)
(72) Erfinder: VOGT, Rainer, 74706 Osterburken (DE); WATZAL, Steffen, 74706 Osterburken (DE)
(74) Vertreter: Canzler & Bergmeier Patentanwälte Partnerschaft mbB
(86) Internationale Anmeldenummer: PCT/EP2017/060657
(87) Internationale Veröffentlichungsnummer: WO 2017/191257

(56) Entgegenhaltungen:
- WO-A1-2013/098834
- DE-A1-102008 045 370
- FR-A1- 2 517 649

## Beschreibung

Die vorliegende Erfindung betrifft eine Transfervorrichtung zum Transfer von Stückgütern zu und/oder von einer Prozessvorrichtung, insbesondere einer stationären Förder- und/oder einer Verarbeitungsstation, und/oder einer weiteren Transfervorrichtung zum Zwecke des Ein- und/oder Ausschleusens von Stückgütern, insbesondere von Werkstücken und/oder von Werkstückträgern.

Aus der US 5,779,428 A ist ein Trägerwagen bekannt, der ein Gestell mit Rollen umfasst, so dass der Trägerwagen für einen Transport von Werkstücken verschoben werden kann. Außerdem weist der Trägerwagen eine Trägerplattform mit mehreren Rollen auf, so dass die Waren von einer benachbarten Vorrichtung auf den bzw. von dem Trägerwagen geschoben werden können. Nachteilig bei diesem Trägerwagen ist es, dass die Werkstücke von einem Personal unter teilweise großer Kraftanstrengung und mit einem entsprechenden Zeit- und damit auch Kostenaufwand auf die Trägerplattform geschoben werden müssen. FR 2 517 649 A1 offenbart eine Transfervorrichtung zum Koppeln an eine Prozessvorrichtung, insbesondere an eine stationäre Förder- und/oder an eine Verarbeitungsstation und/oder an eine weitere Transfervorrichtung, zum Zwecke des Ein- und/oder Ausschleusens von Stückgütern, insbesondere von Werkstücken und/oder von Werkstückträgern, wobei die Transfervorrichtung ein Grundgestell sowie mindestens eine vom Grundgestell getragene Fördereinrichtung umfasst, welche Kraftübertragungsmittel sowie von den Kraftübertragungsmitteln angetriebene Fördermittel aufweist, um Stückgüter an die bzw. von der besagten Prozessvorrichtung übergeben bzw. empfangen zu können, wobei die mindestens eine Fördereinrichtung mindestens ein Abtriebselement (11) einer Kupplung aufweist und zum reversiblen Ankuppeln der Transfervorrichtung an ein korrespondierendes, an der besagten Prozessvorrichtung vorgesehenes Antriebselement (7) der besagten Kupplung ausgebildet ist, wobei die besagte Kupplung bei miteinander gekoppeltem Ab- und Antriebselement eine Kraftübertragung von einer Antriebseinheit der Prozessvorrichtung an die Kraftübertragungsmittel der mindestens einen Fördereinrichtung bewirkt.

Aufgabe der vorliegenden Erfindung ist es, eine Transfervorrichtung zu schaffen, die in einfacher Weise an eine Prozessvorrichtung angekoppelt werden kann und eine erleichterte Werkstücküberführung von der Transfervorrichtung an die Prozessvorrichtung ermöglicht.

Die Aufgabe wird gelöst durch eine Transfervorrichtung nach Anspruch 1 sowie ein System umfassend eine Transfervorrichtung und mindestens eine Prozessvorrichtung nach Anspruch 16.

Vorgeschlagen wird eine Transfervorrichtung zum temporären Zustellen an mindestens eine Prozessvorrichtung, insbesondere an eine stationäre Förder- und/oder an eine Verarbeitungsstation, und/oder an eine weitere Transfervorrichtung zum Zwecke des Ein- und/oder Ausschleusens von Stückgütern, insbesondere von Werkstücken und/oder von Werkstückträgern. Auf der erfindungsgemäßenTransfervorrichtung können die Stückgüter zwischengelagert und/oder transportiert werden. Beispielsweise kann die Transfervorrichtung von einer Prozessvorrichtung zu einer anderen Prozessvorrichtung verschoben werden, so dass die Stückgüter zwischen diesen beiden Prozessvorrichtungen transportiert werden. Auch kann die erfindungsgemäße Transfervorrichtung als permanent angeordneter (oder auch verschiebbarer) Drehtisch zwischen Prozessvorrichtungen (beispielsweise Fördereinrichtungen) oder in Form eines Aufzugs realisiert werden, der unterschiedlich hoch gelegene Prozessvorrichtungen miteinander verbindet.

Von einem Grundgestell der Transfervorrichtung ist mindestens eine Fördereinrichtung getragen, die Kraftübertragungsmittel und Fördermittel umfasst. Hierbei ist die mindestens eine Fördereinrichtung zusammen mit dem Grundgestell oder relativ zum Grundgestell ortsveränderlich positionierbar ausgebildet. Die Fördermittel sind von den Kraftübertragungsmitteln, die mit der Magnetkupplung verbunden sind, angetrieben, so dass die Fördermittel die Stückgüter an die bzw. von der Prozessvorrichtung übergeben bzw. empfangen können. Zum Beispiel können die Stückgüter direkt auf den Fördermitteln aufliegen, so dass bei deren Betätigung die Stückgüter übergeben bzw. empfangen werden können.

Zur Ausbildung der Magnetkupplung umfasst die Transfervorrichtung ein Abtriebselement zum reversiblen Ankuppeln der Transfervorrichtung an ein korrespondierendes, an der besagten Prozessvorrichtung vorgesehenes Antriebselement. Mittels der Magnetkupplung ist eine Kraftübertragung von einer Antriebseinheit der Prozessvorrichtung an die Kraftübertragungsmittel der Fördereinrichtung ermöglicht. Die Transfervorrichtung weist hierbei keine eigene Antriebseinheit, beispielsweise einen Motor, auf. Die Antriebseinheit kann dabei einen separaten, nur für die Transfervorrichtung vorgesehenen Antrieb umfassen, oder ist ein Antrieb, der beispielsweise ebenfalls mindestens eine Fördereinrichtung der Prozessvorrichtung antreibt. Mittels des reversiblen Ankuppelns kann die Transfervorrichtung einfach an die Prozessvorrichtung angeschlossen und wieder entkoppelt werden, um beispielsweise die Stückgüter zu einer weiteren Prozessvorrichtung zu transportieren. Durch das Ankuppeln wird eine Kraftübertragung bzw. ein Kraftfluss durch die Magnetkupplung ermöglicht. Die Transfervorrichtung kann somit insbesondere ohne eigenen Antrieb ausgebildet sein, da die Kraft vom Antriebselement der Prozessvorrichtung durch die Magnetkupplung auf das Abtriebselement der Transfervorrichtung übertragen wird. Von Vorteil ist es auch, dass bei einer derartigen Magnetkupplung keine mechanischen Verbindungen von Hand hergestellt werden müssen. Es muss beispielsweise keine von der Prozessvorrichtung kommende Welle mit den Kraftübertragungsmitteln der Transfervorrichtung verbunden werden.

Ein weiterer Vorteil einer Magnetkupplung ist, dass keine perfekte Zentrierung von Antriebs- und Abtriebselement vorliegen muss, auch bei geringfügiger Dezentrierung lassen sich Drehmomente zuverlässig übertragen.

Das auf der Antriebsseite angeordnete Antriebselement umfasst bei einer vorteilhafterweise als Elektromagnetkupplung ausgebildeten Magnetkupplung einen Elektromagneten. Während das Abtriebselement drehbar gelagert ist und sich entsprechend eines Betriebs der Antriebseinheit der Prozessvorrichtung dreht, ist hingegen der Elektromagnet des Antriebselements der Prozessvorrichtung zumeist feststehend ausgebildet.

Wenn die Transfervorrichtung an die Prozessvorrichtung herangefahren ist und der Elektromagnet noch nicht eingeschaltet ist, ist ein Spalt zwischen An- und Abtriebselement ausgebildet. Beim Einschalten des Elektromagneten wird ein Magnetfeld aufgebaut, wobei sich das Antriebselement axial relativ zur Prozessvorrichtung und/oder das Abtriebselement axial relativ zur Transfervorrichtung verschiebt, bis - bei einer bevorzugten Ausführungsform - sich der besagte Spalt schließt und die beiden Elemente sich berühren (wenn im Folgenden von den "Elementen" die Rede ist, sind dabei das An- und das Abtriebselement gemeint). Beispielsweise wirkt das Magnetfeld auf eine axial verschiebbare Druckplatte des Antriebselements, wobei bei Kontakt der beiden Elemente beispielsweise ein Reibschluss zwischen ihnen ausgebildet wird. Bei dem Kontakt wird die Drehbewegung vom Antriebselement der Prozessvorrichtung auf das Abtriebselement der Transfervorrichtung übertragen. Um eine bessere Kraftübertragung zu gewährleisten, können beide Elemente auch gezahnt sein.

Um die Transfervorrichtung von der Prozessvorrichtung wieder abzukoppeln, wird der Elektromagnet abgeschaltet. Mittels Kraftelementen, beispielsweise Federn, wird das An- bzw. Abtriebselement wieder in Richtung der Prozessvorrichtung bzw. der Transfervorrichtung zurückgezogen, so dass sich der Kontakt aufhebt und der Spalt größer wird. Die Kraftübertragung wird wieder beendet.

Gemäß einer Alternative kann die Magnetkupplung auch als berührungslose Magnetkupplung ausgebildet sein. Dabei weisen die beiden Elemente, auch bei der Kraftübertragung, keinen Kontakt miteinander auf. Die Kraftübertragung wird durch das Magnetfeld des Elektromagneten vermittelt, wobei dazu an dem Abtriebselement zumindest ein weiterer Magnet angeordnet ist, auf den das Magnetfeld des Elektromagneten einwirkt. Die Kraftübertragung findet somit mittels des Magnetfeldes, also berührungslos, von dem Elektromagnet auf den zumindest einen weiteren Magnet statt. Mit der berührungslosen Magnetkupplung können noch mehr bewegliche Teile eingespart werden. Insbesondere ist ein Ankoppeln bzw. ein Abkoppeln der Transfervorrichtung vereinfacht, da ausschließlich der Elektromagnet ein- bzw. abgeschaltet werden muss. Die beiden Elemente müssen beispielsweise nicht gegeneinander verschoben werden.

Eine Magnetkupplung ist damit besonders einfach steuerbar, wobei nur der Elektromagnet an- bzw. ausgeschaltet werden muss, so dass die Kraftübertragung an- bzw. ausgeschaltet werden kann. Beispielsweise für eine Drehrichtungsumkehr oder wenn sich kein Stückgut auf der Transfervorrichtung befindet, kann zur Energieeinsparung die Kraftübertragung auf die Transfervorrichtung zeitweise unterbrochen werden.

Außerdem weist die Magnetkupplung nur wenige bewegliche Teile auf, da die Erzeugung der Anpresskraft zwischen An- und Abtriebselement mittels Magnetkräften, also kontaktlos und nur durch Schließen eines elektrischen Stromkreises, erbracht wird.

Zur kontaktfreien Drehmomentübertragung können vorteilhafterweise auch Magnetkupplungen mit Permanentmagneten realisiert werden. Die Kupplungen bestehen hierbei vorzugsweise aus sich gegenüberliegenden Scheiben, die bevorzugt mit sehr starken Selten-Erde-Magneten bestückt sind. Das Drehmoment, welches dann an der Scheibe des Antriebselements wirkt, wird automatisch über den Luftspalt, der beispielsweise 2-3 mm beträgt, auf die andere Scheibe des Abtriebselements übertragen.

Auch sind Magnetkupplungen mit einer Kombination aus Elektro- und Permanentmagneten denkbar.

Besonders bevorzugt ist das Grundgestell, zusammen mit der mindestens einen Fördereinrichtung, ortsveränderlich positionierbar ausgebildet, um die Fördereinrichtung der Prozessvorrichtung zuzustellen und wieder von ihr fort zu bewegen.

Gemäß einer dementsprechenden, besonders vorteilhaften Ausgestaltung ist das Grundgestell der Transfervorrichtung, insbesondere linear, verfahrbar ausgebildet, insbesondere mittels Rollen, Rädern, Ketten oder Kufen. Bei dieser Ausführung ist die Transfervorrichtung als Zustellwagen - auch Trolley genannt - ausgebildet, der per Hand oder motorisch und auch automatisch von einer Prozessvorrichtung zu einer anderen Prozessvorrichtung (oder einer anderen Einrichtung, insbesondere einem anderen Zustellwagen oderallgemeiner - einer Transfervorrichtung) verfahren werden kann.

Unter dem Begriff "lineares Verfahren" des Grundgestells samt Fördereinrichtung(en) fällt auch ein Anheben und Absenken, um beispielsweise Werkstücke oder Werkstückträger von einer Transportebene zu einer anderen, vertikal versetzten Transportebene zu transportieren.

Alternativ oder zusätzlich ist das Grundgestell zusammen mit der mindestens einen Fördereinrichtung drehbar ausgebildet, vorzugsweise um eine vertikale Drehachse. Beispielsweise kann das Grundgestell samt Fördereinrichtung(en) auf einem ortsfesten Sockel angeordnet sein und um eine Hochachse gedreht werden, so dass das mindestens eine Abtriebselement an verschiedene Antriebselemente verschiedener Prozessvorrichtungen angekoppelt werden kann, um beispielsweise einen Transport eines Werkstücks von einer Prozessvorrichtung zu einer um zu dieser 90° versetzten Prozessvorrichtung zu ermöglichen.

Gemäß einer Alternative ist das Grundgestell ortsfest angeordnet und die mindestens eine Fördereinrichtung relativ zum Grundgestell verfahrbar und/oder drehbar ausgebildet. Gemäß einer dementsprechenden Ausführungsform ist die mindestens eine Fördereinrichtung in der Höhe verfahrbar ausgebildet, während das Grundgestell an seinem Platz bleibt. Auch bei dieser Ausführungsform können Werkstücke oder Werkstückträger von einer Transportebene zu einer anderen, vertikal versetzten Transportebene transportiert werden.

Allgemein gesprochen umfasst die Transfervorrichtung bevorzugt Hubmittel. Mittels der Hubmittel lässt sich insbesondere eine Transportebene der Transfervorrichtung bezüglich ihrer Höhe an eine Transportebene der Prozessvorrichtung einstellen. Die Transportebene der Transfervorrichtung ist dabei im Wesentlichen durch die Fördermittel definiert, auf denen die Stückgüter aufliegen. Mittels der Hubmittel können beispielsweise die Fördermittel bzw. die Fördereinrichtung gegenüber dem Grundgestell nach oben und/oder nach unten verfahren werden. Zusätzlich kann ein Teil des Grundgestells gegenüber dem restlichen Grundgestell nach oben und/oder nach unten verfahren werden. In allen Fällen werden die Fördermittel verfahren, so dass die Transportebene der Transfervorrichtung in der Höhe einstellbar ist. Damit kann beispielsweise ein Abladen der Stückgüter durch ein Personal vereinfacht werden. Wenn beispielsweise die Stückgüter in ein Regal, deren unterschiedliche Regalebenen einschließlich ihrer jeweiligen Fördereinrichtungen im Rahmen der Erfindung ebenfalls als Prozessvorrichtungen bezeichnet werden können, eingeräumt werden müssen, kann die Höhe der Transportebene an die jeweilige Höhe eines oder mehrerer der Regalböden angepasst werden.

Es ist zudem von Vorteil, wenn die Transportebene der Transfervorrichtung, d.h. die Transportebene der mindestens einen Fördereinrichtung, auf verschieden hohe Transportebenen von einer oder mehrerer Prozessvorrichtungen verfahren werden kann. In diesem Fall kann die Hubeinrichtung Stückgüter beispielsweise von einer Transportebene der Prozessvorrichtung aufnehmen und zu einer anderen Transportebene der gleichen (oder einer anderen) Prozessvorrichtung anheben oder absenken und die Stückgüter dort mittels der Fördereinrichtung an die andere Transportebene der Prozessvorrichtung abgeben.

Eine vorteilhafte Weiterbildung bezüglich der Hubmittel sieht vor, dass die Hubmittel mittels der mindestens einen Magnetkupplung von der Antriebseinheit der Prozessvorrichtung angetrieben werden können. Beispielsweise kann über die Magnetkupplung eine vertikale Förderkette oder ein Förderriemen zum vertikalen Verfahren der mindestens einen Fördereinrichtung vorgesehen sein. Somit ist die Konstruktion der Transfervorrichtung vereinfacht, da kein gesonderter Antrieb für die Hubmittel an der Transfervorrichtung mitgeführt werden muss. Eine Verbindung mittels der Magnetkupplung ist bei einem Ankuppeln der Transfervorrichtung an die Prozessvorrichtung ohnehin entsprechend der Erfindung ausgebildet, so dass nur ein Teil der Antriebskraft von der Antriebseinheit der Prozessvorrichtung abgezweigt werden muss. Dabei können die Kraftübertragungsmittel neben den Fördermitteln auch die Hubmittel antreiben.

Zusätzlich oder alternativ können die Hubmittel auch mit einer zusätzlichen Magnetkupplung angetrieben sein, deren An- und Abtriebselemente wiederum an der Prozessvorrichtung bzw. der erfindungsgemäßen Transfervorrichtung vorgesehen sind. Hierzu kann diese zusätzliche Magnetkupplung entsprechend derjenigen Magnetkupplung ausgebildet sein, welche die Kraftübertragung zwischen der Antriebseinheit der Prozessvorrichtung und der Kraftübertragungsmittel der Transfervorrichtung bereitstellt. Somit können die Hubmittel gesondert zu den Fördermitteln betrieben werden. Wenn beispielsweise die Stückgüter bereits auf den Fördermitteln aufliegen, können diese abgeschaltet werden und nur noch die Hubmittel alleine mittels der zusätzlichen Magnetkupplung betrieben werden.

Es ist möglich, dass die erfindungsgemäße Transfervorrichtung ausschließlich in einer horizontalen Ebene verfahrbar ausgebildet ist oder ausschließlich Hubmittel für den vertikalen Transport von Stückgütern aufweist. Im letzteren Fall benötigt die Transfervorrichtung nicht notwendigerweise unterseitige Rollen, Räder, Kufen, Schienen o. ä., sondern kann stationär an einer oder mehreren Prozessvorrichtungen angeordnet sein. Selbstverständlich können auch beide Verfahrmöglichkeiten, waagerecht und senkrecht, vorgesehen sein, insbesondere in Form einer in der Horizontalen verfahrbaren Transfervorrichtung mit zusätzlichen Hubmitteln für die Fördereinrichtung. Bei einer anderen Variante (s. weiter unten) ist die gesamte Transfervorrichtung vertikal verfahrbar ausgebildet.

Besonders bevorzugt erstrecken sich die Fördermittel der Transfervorrichtung zwischen zwei Längsprofilen, wobei zumindest an einem Ende eines der beiden Längsprofile mindestens ein Abtriebselement vorgesehen ist. Die beiden Längsprofile verlaufen vorzugsweise in einer gemeinsamen Horizontalebene. Sie sind bevorzugt aus Aluminium oder Stahl gefertigt.

Gemäß einem vorteilhaften Ausführungsbeispiel sind auf einer Seite der Transfervorrichtung, die einer Prozessvorrichtung zustellbar ist, jeweils zwei Abtriebselemente vorgesehen, vorzugsweise an sich benachbarten Enden von besagten Längsprofilen, so dass die Fördermittel der Transfervorrichtung mittels zweier benachbarter Magnetkupplungen angetrieben werden können. Bei einer einfacheren, kostengünstigeren Variante ist nur ein Abtriebselement auf einer Seite der Transfervorrichtung vorgesehen. Es ist zudem möglich, dass an sich gegenüberliegenden Enden der Transfervorrichtung je ein Abtriebselement (beispielsweise angeordnet an je einem der beiden Enden eines der besagten Längsprofile) oder jeweils zwei Abtriebselemente vorgesehen sind.

Eine vorteilhafte Weiterbildung der Erfindung sieht vor, dass die mindestens eine Fördereinrichtung einen Stetigförderer als Fördermittel umfasst. Eine bevorzugte Ausführungsform ist hierbei ein Rollenförderer, dessen Förderrollen über die Magnetkupplung und die Kraftübertragungsmittel antreibbar sind. Ein Rollenförderer weist dabei mehrere in einer Förderrichtung der Stückgüter beabstandete Wellen auf, an denen vorzugsweise zumindest zwei Förderrollen angeordnet sind. Die Wellen und somit die Förderrollen des Rollenförderers sind dabei derart lager- und antreibbar, dass die Stückgüter in einfacher Weise auf und von den Rollen transportiert werden können. Außerdem bietet sich ein Transport mit Förderrollen an, wenn die Stückgüter eine flache Auflagefläche aufweisen und/oder beispielsweise in oder auf einem Werkstückträger lagern.

Als Fördereinrichtung eingesetzte Rollenförderer können gewichtsabhängig oder gewichtsunabhängig ausgebildet sein. Bei einer Variante von gewichtsunabhängigen Rollenförderern weisen diese eine Rutschkupplung mit einer Königswelle als Kraftübertragungsmittel auf, die zwei Kegelräder umfasst. Ein gewichtsabhängiger Rollenförderer ist beispielsweise als Friktionsrollenbahn ausgebildet, bei der eine Kette über die besagte Magnetkupplung angetrieben wird und die Kette die Rollen antreibt. Hierbei kann ein Kegelrad die Ritzel der Kette antreiben.

Die mindestens einen Stetigförderer aufweisende Fördereinrichtung kann auch einen Kettenförderer, einen Gurtförderer, einen Modulbandförderer, einen Zahnriemenförderer und/oder einen Scharnierbandförderer umfassen. Dabei kann für jede Art von Stückgütern die Fördereinrichtung auf die Anforderungen angepasst werden. Ein Kettenförderer oder ein Modulbandförderer kann beispielsweise eingesetzt werden, wenn es sich bei den Stückgütern um kleinere Gegenstände, beispielsweise Schrauben, handelt. Einzelne oder mehrere Stückgüter können auch auf einem Träger, wie beispielsweise einem Werkstückträger, transportiert werden, der übergeben oder empfangen wird.

Von Vorteil ist es ferner, wenn die mindestens eine Fördereinrichtung mindestens ein und vorzugsweise zwei in Förderrichtung verlaufende Längsprofile - vorzugsweise die oben genannten Längsprofile - aufweist, entlang derer ein mechanisches Kraftübertragungsmittel für die Fördermittel (beispielsweise Rollenförderer) verläuft, und dass an zumindest einem Ende zumindest einer dieser Längsprofile eine Abtriebselement angeordnet ist. Das mechanische Kraftübertragungsmittel kann beispielsweise eine Welle zum Übertragen der Drehbewegung von dem Abtriebselement auf die Fördermittel umfassen. Zusätzlich oder alternativ kann das mechanische Kraftübertragungsmittel auch eine Kette, einen Treibriemen oder einen Zahnriemen umfassen, das sich entlang des Längsprofils erstreckt und dabei die Förderrollen antreibt.

Ebenso ist es vorteilhaft, wenn die Kraftübertragungsmittel eine Antriebsstange umfassen, die sich durch die Magnetkupplung in Rotation versetzen lässt und welche hierbei die Fördermittel, beispielsweise eine der beiden Stirnseiten von Wellen, welche die Förderrollen tragen, kraft- oderformschlüssig antreibt. Die Antriebsstange kann sich dabei entlang der gesamten Länge der Transfervorrichtung erstrecken, so dass alle Fördermittel, die über die Länge der Transfervorrichtung angeordnet sind, antreibbar sind. Dies vereinfacht die Konstruktion, da im Wesentlichen mit einem einzigen Bauteil alle Fördermittel erreichbar sind. Beispielsweise ist in Bereichen der Antriebsstange, die den Fördermitteln zugeordnet ist, ein Kegelrad angeordnet, das mit Zahnrädern der Fördermittel zusammenwirkt, so dass eine Drehbewegung der Antriebsstange in Drehbewegungen von einer Vielzahl an Fördermitteln in verschiedenen Bereichen der Transfervorrichtung umgewandelt werden kann. Es ist von Vorteil, wenn die Wellen, welche die Förderrollen tragen, an ihren Stirnseiten entsprechend ausgebildete Zahnräder aufweisen, in welche die Kegelradzähne der Antriebsstange kämmen.

Demgemäß sind gemäß dieser vorteilhaften Ausführungsform alle Wellen mit den darauf angeordneten Förderrollen mittels der mit der Magnetkupplung verbundenen Kraftübertragungsmitteln direkt antreibbar. Dies vereinfacht die Konstruktion, da die Kraftübertragung an die Förderrollen nur mit einem Kraftübertragungsmittel hergestellt werden kann.

Gemäß einer Alternative ist es vorteilhaft, wenn der Rollenförderer mindestens eine über die Kraftübertragungsmittel antreibbare Welle (mit oder ohne daran befestigten Förderrollen) aufweist, wobei andere Wellen, auf denen Förderrollen befestigt sind, dann mit einem Riemen- und/oder Kettenübertrieb mit der besagten Welle verbunden sind. Diese Konstruktion ist relativ einfach zu realisieren. Auch kann eine Wartung der Transfervorrichtung vereinfacht werden, da bei einer Beschädigung eines Riemen- und/oder Kettenübertriebs nur dieser ausgetauscht werden muss.

Des Weiteren wird im Rahmen der vorliegenden Erfindung ein System vorgeschlagen, das eine nach der vorangegangenen Beschreibung ausgebildete Transfervorrichtung sowie zumindest eine Prozessvorrichtung umfasst. Die verfahrbare oder stationäre (und dann beispielsweise mit Hubmitteln für die mindestens eine Fördereinrichtung ausgerüstete) Transfervorrichtung, bei der zumindest die mindestens eine Fördereinrichtung ortsveränderlich positionierbar ist, dient zum Ein- und/oder Ausschleusen von Stückgütern, insbesondere von Werkstücken und/oder von Werkstückträgern (in oder auf denen Werkstücke lagern), während die Prozessvorrichtung beispielsweise als eine stationäre Förder- und/oder Verarbeitungsstation ausgebildet ist. Die Transfervorrichtung weist des Weiteren - gemäß dem Vorgesagten - mindestens ein Abtriebselement als Teil einer Magnetkupplung auf, deren dazu korrespondierender Teil ein Antriebselement umfasst, das an der Prozessvorrichtung angeordnet ist. Mit der Magnetkupplung wird eine Kraftübertragung von einer Antriebseinheit der Prozessvorrichtung an die Kraftübertragungsmittel der Fördereinrichtung realisiert.

Die Prozessvorrichtung umfasst dabei ebenfalls mindestens eine Fördereinrichtung, die vorzugsweise ebenfalls Fördermittel und/oder Kraftübertragungsmittel aufweist. Beispielsweise umfasst die Fördereinrichtung der Prozessvorrichtung einen Stetigförderer in Form eines Kettenförderers, eines Gurtförderers, eines Modulbandförderers, eines Zahnriemenförderers und/oder eines Scharnierbandförderers. Die Fördermittel der Prozessvorrichtung können beispielsweise Förderrollen umfassen.

Eine vorteilhafte Weiterbildung des erfindungsgemäßen Systems sieht vor, dass das System ein Positionierungsgestell zum Positionieren der Transfervorrichtung an der Prozessvorrichtung umfasst. Das Positionierungsgestell weist bevorzugt eine Einfahröffnung sowie seitliche Begrenzungen und eine der Einfahröffnung gegenüber liegende und der Prozessvorrichtung benachbarte Begrenzung auf. Mittels des Positionierungsgestells wird die Positionierung vereinfacht, da die Transfervorrichtung seitlich, an ihrer Vorder- und/oder ihrer Hinterseite geführt werden kann, so dass beispielsweise die Transportebenen der Transfervorrichtung sowie der Prozessvorrichtung besser aneinander angepasst werden können.

Außerdem ist es von Vorteil, wenn das Positionierungsgestell ortsfest an oder bei der Prozessvorrichtung angeordnet ist, beispielsweise durch bodenseitige Verschraubungen. Das Positionierungsgestell weist durch diese Fixierung immer die gleiche Position auf, so dass bei einem wiederholten Ein- und/oder Ausschleusen von Stückgütern die beiden auf einer Höhe liegenden Transportebenen der Transfervorrichtung und der Prozessvorrichtung immer gleich zueinander ausgerichtet sind. Außerdem kann damit das Positionierungsgestell nicht durch eine Kollision mit der Transfervorrichtung verschoben werden. Die Transfervorrichtung braucht demnach nur stets in die Einfahröffnung eingefahren werden und ist dann durch das Positionierungsgestell an einer definierten Stelle ausgerichtet.

Vorteilhaft ist es auch, wenn die mindestens eine Fördereinrichtung der Transfervorrichtung und mindestens eine Fördereinrichtung der Prozessvorrichtung gleiche oder gleichwertige und miteinander in Horizontalrichtung fluchtende oder in Flucht bringbare Fördermittel aufweisen. Somit sind die beiden Fördereinrichtungen auf einer gleichen Höhe angeordnet oder - insbesondere bei Vorsehen von Hubmitteln - auf gleiche Höhe bringbar. Insbesondere sind die erste und die zweite Transportebene auf einer gleichen Höhe angeordnet bzw. anordenbar. Damit können die Stückgüter - ggf. nach einer Höhenanpassung zwischen der Transfervorrichtung und der Prozessvorrichtung - hin und her geschoben werden. Ein Übergangsbereich zwischen beiden Fördereinrichtungen ist bei einer derartigen Anordnung ebenfalls ohne etwaige Hindernisse überwindbar.

Ferner ist es von Vorteil, wenn das System eine Transporteinrichtung umfasst, mittels derer die Transfervorrichtung zwischen verschiedenen Prozessvorrichtungen und/oder zu einer weiteren Einrichtung verfahrbar ausgebildet ist. Die Transporteinrichtung kann dabei Rollen, Schienen, Kufen und/oder Räder umfassen. Damit kann die Transfervorrichtung in der Transporteinrichtung geführt werden, so dass die Transfervorrichtung mit Hilfe einer elektronischen Steuerung vorzugsweise automatisch und ohne eigenen Antrieb zwischen den Prozessvorrichtungen verfahren werden kann. Zusätzlich oder alternativ können auch in einem Untergrund elektrische, magnetische, einfache metallische und/oder Licht-Leitungen eingebracht sein, so dass ein Sensor an der Transfervorrichtung diesen Leitungen automatisch folgen kann. Dazu umfasst die Transfervorrichtung vorzugsweise einen eigenen Antrieb mit einem Energiespeicher.

Ebenso ist es von Vorteil, wenn die Transporteinrichtung eine Verfahreinrichtung, insbesondere Zahnriemen, Zahnstangen, einen Reibradantrieb und/oder Zugseile, umfasst und/oder die Transfervorrichtung einen eigenen Antrieb aufweist, so dass die Transfervorrichtung in der Transporteinrichtung verfahrbar ausgebildet ist. Im erstgenannten Fall können eine oder mehrere Transfervorrichtungen vorteilhafterweise an die Verfahreinrichtung, beispielsweise ein Zugseil, ankoppelbar sein, so dass das Zugseil stets angetrieben werden kann und die Transfervorrichtungen bei Bedarf an das Zugseil angekoppelt werden. Gelangen die Transfervorrichtungen zu der gewünschten Position, können sie vom Zugseil abgekoppelt werden.

Zusätzlich oder alternativ ist es von Vorteil, wenn die Transporteinrichtung vertikal verlaufend ausgebildet ist und die gesamte Transfervorrichtung, d.h. nicht nur die Fördermittel oder die Fördereinrichtung wie bei den oben genannten Hubmitteln, anhebt und absenkt. Die Transporteinrichtung gleicht dabei einem Aufzug für die Transfervorrichtung, die Stückgüter an bzw. von auf verschiedenen Höhen angeordneten Prozessvorrichtungen übergeben bzw. empfangen kann. Die Transporteinrichtung umfasst dabei ebenfalls eine Verfahreinrichtung, die beispielsweise Zugseile aufweist. Die Transfervorrichtung hängt dabei an den Zugseilen und kann beispielsweise mittels einer Winde nach oben gezogen und/oder nach unten abgeseilt werden.

Weitere Vorteile der Erfindung sind in den nachfolgenden Ausführungsbeispielen beschrieben. Es zeigen:
- **Figur 1**: eine Seitenansicht einer Transfervorrichtung, angekoppelt an eine Prozessvorrichtung,
- **Figur 2**: eine Draufsicht auf die an eine Prozessvorrichtung angekoppelte Transfervorrichtung gemäß der Figur 1,
- **Figur 3**: eine Draufsicht auf ein System umfassend eine Transfervorrichtung, drei Prozessvorrichtungen und eine Transporteinrichtung,
- **Figur 4**: eine Seitenansicht einer Transfervorrichtung mit Hubmitteln, angekoppelt an eine Prozessvorrichtung,
- **Figur 5**: eine Seitenansicht einer weiteren Ausführungsform einer Transfervorrichtung mit Hubmitteln, angekoppelt an eine Prozessvorrichtung, und
- **Figur 6**: eine Draufsicht auf ein System mit vier Prozessvorrichtungen und einer zentralen, als Drehtisch ausgebildeten Transfereinrichtung.

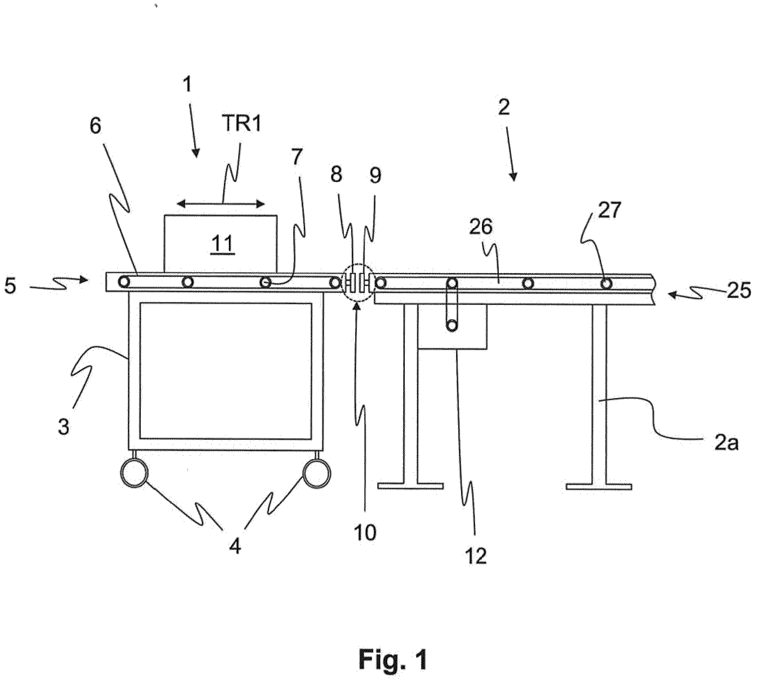

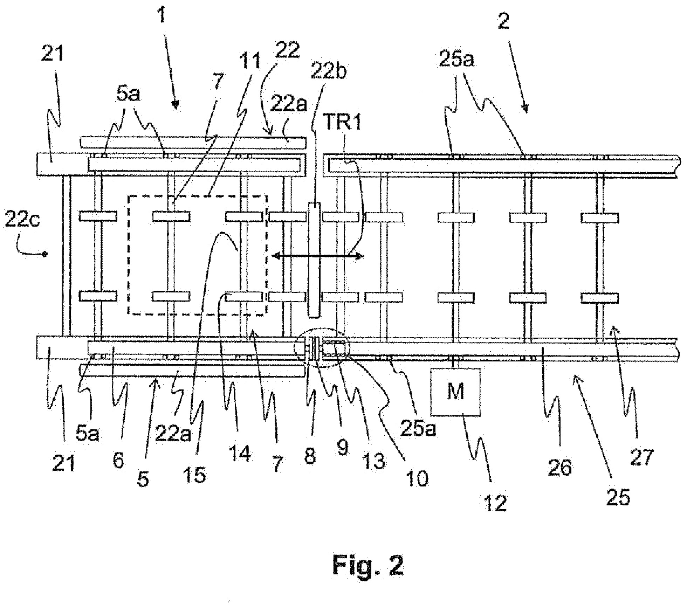

In der Figur 1 ist eine Seitenansicht einer Transfervorrichtung 1 und in der Figur 2 eine entsprechende Draufsicht gezeigt, wobei die Transfervorrichtung 1 an eine Prozessvorrichtung 2 herangeführt ist. Die Transfervorrichtung 1 umfasst ein verfahrbares Grundgestell 3, das auf Rollen 4 verschoben werden kann, beispielsweise manuell geschoben oder mittels maschineller Unterstützung. Die Transfervorrichtung 1 kann bei dieser Ausgestaltung als Zustellwagen oder Trolley bezeichnet werden, der temporär an eine Prozessvorrichtung 2 herangefahren werden kann. In der Figur 2 ist zudem schematisch ein Positioniergestell 22 eingezeichnet (nicht dargestellt in der Figur 1), das zwei seitliche Begrenzungen 22a und eine vordere, der Prozessvorrichtung benachbarte Begrenzung 22b ausweist. Gegenüber der Vorderbegrenzung 22b ist eine Einfahröffnung 22c vorgesehen. Diese Begrenzungen 22a, 22b sind vorzugsweise als Gitter, Wände oder ähnliche stabile Flächengebilde ausgebildet, die ortsfest angeordnet sind, beispielsweise durch bodenseitige Verschraubungen. Sie dienen dem präzisen Annähern und Ankuppeln der Transfervorrichtung 1 an die Prozessvorrichtung 2.

Das Grundgestell 3 trägt eine Fördereinrichtung 5 (s. Draufsicht in der Figur 2), die Kraftübertragungsmittel 6 sowie Fördermittel 7 umfasst. Die Kraftübertragungsmittel 6 sind in diesem Ausführungsbeispiel jeweils als ein umlaufendes Band, beispielsweise ein Treibriemen in Form eines Zahnriemens oder Keilriemens, oder einer Kette, ausgebildet. Die Fördermittel 7 können, wie hier angedeutet und auch in Figur 2 gezeigt, als Rollenförderer mit auf Wellen angeordneten Förderrollen ausgebildet sein, deren beide Enden in Lagern 5a aufgenommen sind, die wiederum in Längsprofilen 21 angeordnet sind. Jeweils ein freies Ende bzw. die Stirnseite dieser Wellen wird von den Kraftübertragungsmitteln 6 angetrieben. Auf den Fördermitteln 7 ist ein Stückgut 11 (in der Figur 2 nur gestrichelt dargestellt) - entweder als einzelnes Werkstück ausgebildet und direkt auf den Fördermitteln 7 aufliegend oder in einen Werkstückträger eingelegt - angeordnet, das mittels der Fördermittel 7 in den Transportrichtungen TR1 transportiert werden kann. Stückgüter 11 können dabei an die vorliegend stationär von einem Gestell 2a getragene Prozessvorrichtung 2 übergeben oder durch die Transfervorrichtung 1 von der Prozessvorrichtung 2 empfangen werden.

Die Transfervorrichtung 1 weist darüber hinaus ein Abtriebselement 8 auf, das an einem der Prozessvorrichtung 2 zugewandten Ende einer der beiden Fördereinrichtungen 5 angeordnet ist. An dem Abtriebselement 8 kann ein korrespondierendes Antriebselement 9 angekuppelt werden, welche an der Prozessvorrichtung 2 unmittelbar gegenüber der Transfervorrichtung 1 und auf gleicher Höhe mit dem Abtriebselement 8 angeordnet ist.

Beide Elemente, Antriebselement 9 und Abtriebselement 8, sind Teil einer Magnetkupplung 10, wobei mittels der Magnetkupplung 10 eine Kraftübertragung von einer Antriebseinheit 12 der Prozessvorrichtung 2 an die Kraftübertragungsmittel 6 der Fördereinrichtung 5 ermöglicht ist. Dabei ist das Abtriebselement 8 mit hier nicht gezeigten Kraftverbindungen, beispielsweise mit einem Kegelrad, Zahnriemen, Keilriemen und/oder Antriebsstangen, mit den Kraftübertragungsmitteln 6 der Transfervorrichtung 1 verbunden. Auf eine ähnliche Weise ist das Antriebselement 9 mit einer Fördereinrichtung 25 der Prozessvorrichtung 2 und schließlich mit der Antriebseinheit 12 (nur in Figur 1 dargestellt) verbunden. Die Fördereinrichtung 25 umfasst - ähnlich der Fördereinrichtung 5 - Kraftübertragungsmittel 26, beispielsweise in Form eines Zahnriemens, und von diesen angetriebene Fördermittel 27, beispielsweise einen Rollenförderer mit Förderrollen. Die aktiv und nicht aktiv angetriebenen freien Enden der Fördermittel 27 sind wiederum in Lagern 25a rotatorisch gelagert.

Die Magnetkupplung 10 umfasst vorliegend zudem einen Elektromagneten 13 (s. Figur 2), der Teil des Antriebselements 9 ist. Der Elektromagnet 13 ist dabei drehfest mit der Prozessvorrichtung 2 verbunden, wohingegen jeweils eine Druckplatte des Antriebselements 9 sich durch die Antriebseinheit 12 in Drehung versetzen lässt. Mittels des Elektromagneten 13 ist ein Magnetfeld ausbildbar, das auf das Abtriebselement 8 der Fördereinrichtung 5 der Transfervorrichtung 1 wirkt. Insbesondere kann das Magnetfeld über einen Spalt zwischen den beiden Elementen 8, 9 anziehend wirken, so dass sich das Antriebselement 9 von der Prozessvorrichtung 2 weg auf das Abtriebselement 8 zu bewegt, bis der Abstand zwischen beiden Elementen 8, 9 überwunden ist und beide Elemente 8, 9 einen Kontakt aufweisen. Die sich drehende Druckplatte Antriebselements 9 überträgt diese Drehbewegung mittels beispielsweise Reibschluss auf das Abtriebselement 8. Um die Kraftübertragung zu unterstützen, können beide Elemente 8, 9 auch gezahnt sein. Insgesamt wird auf diese Weise eine Kraftübertragung von der Antriebseinheit 12 zu den Kraftübertragungsmitteln 6 ausgebildet. Eine derartige Magnetkupplung 10 wird auch als Elektromagnetkupplung bezeichnet.

Zusätzlich oder alternativ kann sich aufgrund der magnetischen Anziehung auch das Abtriebselement 8 von der Fördereinrichtung 5 weg auf das Antriebselement 9 zu bewegen.

Der Elektromagnet 13 ist dabei besonders einfach ein- und/oder ausschaltbar. Beim Ausschalten des Elektromagnets 13 können die beiden Elemente 8, 9 beispielsweise durch hier nicht gezeigte Kraftelemente, beispielsweise Federn, voneinander weg bewegt werden, so dass die Wirkverbindung unterbrochen und die Kraftübertragung beendet wird.

Ein weiterer Vorteil der Magnetkupplung 10 ist es, dass bei einem Ein- bzw. Abschalten der Kraftübertragung die Antriebseinheit 12 nicht mit ein- bzw. abgeschaltet werden muss. Es muss nur der Elektromagnet 13 der Magnetkupplung 10 durch die magnetische Kraft entsprechend angesteuert werden. Insbesondere muss der Elektromagnet 13 keine besonders hohe Leistung aufweisen, da dieser nicht die eigentliche Antriebseinheit darstellt, sondern nur die Wirkverbindung zwischen den beiden Elementen 8, 9 für die Kraftübertragung herstellt.

Die bereits erwähnte Antriebseinheit 12 kann beispielsweise als ein Antriebsmotor ausgebildet sein, der mittels eines Zahnriemens die Fördereinrichtung 25 der Prozessvorrichtung 2 antreiben kann.

Wie in der Draufsicht der Figur 2 gezeigt sind die Fördermittel 7 zwischen den zwei parallel verlaufenden Längsprofilen 21 angeordnet und mittels der Kraftübertragungsmittel 6, die an einem der Längsprofile 21 vorgesehen sind, antreibbar. Die Kraftübertragungsmittel 6 sind vorliegend als Zahnriemen ausgebildet. Sie könnten beispielsweise auch als Antriebsstange ausgebildet sein, die sich entlang der Fördereinrichtung 5 erstreckt.

Die Fördermittel 7 sind in diesem Ausführungsbeispiel als Rollenförderer ausgebildet, wobei auch eine Ausbildung als Kettenförderer, Gurtförderer, Modulförderer, Zahnriemenförderer und/oder Scharnierförderer möglich ist. Die Fördermittel 7 umfassen in diesem Beispiel mehrere in Transportrichtung TR1 beabstandete Wellen 15 mit jeweils zwei voneinander quer zur Transportrichtung TR1 beabstandeten Förderrollen 14. Die Wellen 15 sind in ihren Endbereichen in den Lagern 5a drehbar gelagert und bilden mit den Kraftübertragungsmitteln 6 eine Wirkverbindung.

Gemäß einer nicht dargestellten Alternative sind zwei Magnetkupplungen 10 vorgesehen, vorzugsweise an je einem Ende der beiden Längsprofile 21. Somit können beide Stirnseiten der Wellen 15 angetrieben werden.

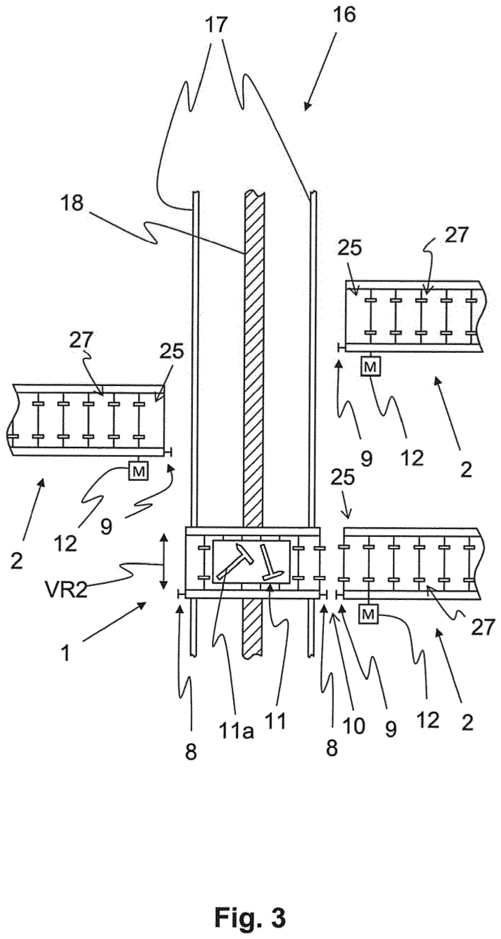

Figur 3 zeigt eine Draufsicht auf ein System, das eine Transfervorrichtung 1, drei Prozessvorrichtungen 2 und eine Transporteinrichtung 16 umfasst. Zwei der drei Prozessvorrichtungen 2 sind auf einer Seite der Transporteinrichtung 16, die dritte auf deren anderer Seite angeordnet. Sie weisen eine gemeinsame horizontale Transportebene für Stückgüter 11 auf. In diesem Ausführungsbeispiel soll nur auf die wesentlichen Unterschiede zu den vorangegangenen Figuren eingegangen werden.

Die Transporteinrichtung 16 umfasst zwei Schienen 17 und eine Verfahreinrichtung 18, so dass die Transfervorrichtung 1 auf den Schienen 17 mittels der Verfahreinrichtung 18 verfahren werden kann. Die Transfervorrichtung 1 weist dabei beispielsweise Räder (vgl. Figur 1) und/oder Kufen (hier nicht gezeigt) auf, um auf den Schienen 17 zu fahren. Zusätzlich oder alternativ kann die Transfervorrichtung 1 auch einen eigenen Antrieb aufweisen, mit dem sie selbstständig auf den Schienen 17 verfahren werden kann. Die Verfahreinrichtung 18 kann zum Beispiel einen Kettenzug, Zugketten, Zahnriemen oder ähnliches umfassen, die an der Transfervorrichtung 1 angreifen, um diese auf den Schienen 17 verfahren zu können. Alternativ zu den Schienen 17 kann die Transfervorrichtung 1 auch Räder aufweisen, die direkt auf einem Untergrund wie einem Fabrikhallenboden abrollen können.

Des Weiteren weist die Transfervorrichtung 1 an jeweils entgegengesetzten Enden von beiden Längsprofilen 21, die senkrecht zu den Schienen 17 verlaufen, je ein Abtriebselement 8 auf. Die beiden Abtriebselemente 8 sind den Kraftübertragungsmitteln 6 einer Fördereinrichtung 5 zugeordnet (analog zu den Erläuterungen zu den Figuren 1 und 2). Dabei kann jede der zwei Abtriebselemente 8 der Transfervorrichtung 1 mit jeweils einem Antriebselement 9 einer benachbarten Prozessvorrichtung 2 eine Magnetkupplung 10 ausbilden. Stückgüter 11 (in der Figur 3 ein Werkstückträger mit zwei eingelegten Werkstücken 11a) können dann beispielsweise von der Prozessvorrichtung 2 auf die Transfervorrichtung 1 übergeben werden. Daraufhin kann beispielsweise die Transfervorrichtung 1 mittels der Transporteinrichtung 16 in der Verfahrrichtung VR2 verfahren werden, bis die Transfervorrichtung 1 beispielsweise die nächste Prozessvorrichtung 2 (in der Figur 3 die mittlere) erreicht. Dort angekommen, kann das andere Abtriebselement 8 der Transfervorrichtung 1 mit einem Antriebselement 9 dieser Prozessvorrichtung 2 eine Wirkverbindung aufbauen, so dass eine Kraftübertragung von der Antriebseinheit 12 der mittleren Prozessvorrichtung 2 auf die Kraftübertragungsmittel 6 (vgl. beispielsweise Figur 2) der Transfervorrichtung 1 ermöglicht wird. Die derart gegen den Uhrzeigersinn angetriebenen Förderrollen der Transfervorrichtung 1 transportieren die Stückgüter 11 von der Transfervorrichtung 1 auf die mittlere Prozessvorrichtung 2. Es können alternativ auch weitere Stückgüter 11 von dieser Prozessvorrichtung 2 empfangen werden, indem die Förderrollen dieser Prozessvorrichtung 2 und die Förderrollen der Transfervorrichtung 1 im Uhrzeigersinn angetrieben werden. Danach kann die Transfervorrichtung 1 beispielsweise zu einer weiteren Prozessvorrichtung 2 (in Figur 3 die obere) oder zur erstgenannten Prozessvorrichtung (in Figur 3 die untere) oder zu einer weiteren hier nicht gezeigten Einrichtung verfahren werden, um dort Stückgüter 11 abzugeben und/oder aufzunehmen.

In einem alternativen, nicht dargestellten Ausführungsbeispiel können die Prozessvorrichtungen 2 auch übereinander, insbesondere auf verschiedenen Höhen bzw. Ebenen angeordnet sein. Eine derartige Anordnung ist beispielsweise in einem Hochregal ausgebildet, deren einzelne Regalebenen einschließlich ihrer Fördereinrichtungen im Rahmen der vorliegenden Erfindung ebenfalls unter den Begriff Prozessvorrichtung fallen. Die Transporteinrichtung 16 erstreckt sich dabei vertikal und wirkt als Aufzug, so dass die gesamte Transfervorrichtung 1 nach oben gezogen und/oder nach unten abgelassen werden kann. Die Transporteinrichtung 16 umfasst dabei ebenfalls eine Verfahreinrichtung 18, die mittels Zugseilen realisiert sein kann, an denen die Transfervorrichtung 1 aufgehängt ist. Mittels der Zugseile kann die gesamte Transfervorrichtung 1 nach oben gezogen und/oder abgeseilt werden. Dadurch ist es möglich, Stückgüter 11 von verschiedenen Prozessvorrichtungen 2 auf unterschiedlichen Transportebenen zu empfangen bzw. zu übergeben.

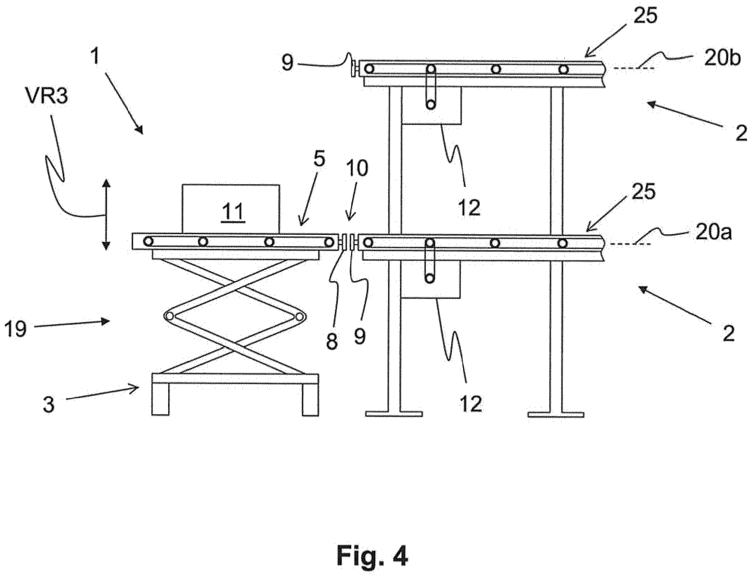

Figur 4 zeigt in Seitenansicht ein ähnliches Ausführungsbeispiel wie in den Figuren 1 und 2 mit einer Transfervorrichtung 1, angekoppelt an eine Prozessvorrichtung 2. Es soll lediglich auf die wesentlichen Unterschiede zu den Figuren 1 und 2 eingegangen werden. Die Transfervorrichtung 1 weist Hubmittel 19 auf, welche insbesondere die Fördereinrichtung 5 (ggf. mit Teilen des Gestells 3) in der Höhe hin und her verfahren kann, s. Verfahrrichtung VR3. Die Hubmittel 19 dienen dazu, die Höhe der Fördereinrichtung 5 der Transfervorrichtung 1 an die Höhe einer Transportebene 20a oder 20b der Prozessvorrichtung 2 anzugleichen, um das Stückgut 11 zwischen der Transfervorrichtung 1 und der Prozessvorrichtung 2 fördern zu können.

Alternativ oder zusätzlich können die Hubmittel 19 die Fördereinrichtung 5 auf verschiedene Transportebenen 20a, 20b von übereinander angeordneten Prozessvorrichtungen 2 anheben und absenken, um auf diesen Transportebenen 20a, 20b Stückgüter 11 abzugeben oder zu empfangen. Wenn beispielsweise zwei Prozessvorrichtungen 2 direkt übereinander und gleich orientiert sind (s. Figur 4), können die Hubmittel 19 die Fördereinrichtung 5 der Transfervorrichtung 1 zwischen diesen beiden Prozessvorrichtungen 2 verfahren. So ist es beispielsweise möglich, ein Stückgut 11 von der oberen Prozessvorrichtung 2 abzuholen und zur unteren Prozessvorrichtung 2 zu bringen. Dazu müssen lediglich die Hubmittel 19 die Fördereinrichtung 5 vertikal verfahren. Dies bietet sich beispielsweise dort an, wo mindestens zwei Prozessvorrichtungen 2 übereinander angeordnet sind und die restlichen, wie beispielsweise in der Figur 3 beschrieben, nebeneinander, insbesondere in einer Ebene, angeordnet sind.

Die Hubmittel 19 sind in dem Ausführungsbeispiel der Figur 4 als eine Scherenhubbühne ausgebildet. Zusätzlich oder alternativ können die Hubmittel 19 auch eine hydraulische oder pneumatische Hubeinrichtung und/oder einen elektrischen Antrieb umfassen, welche zumindest die Fördereinrichtung 5 in der Verfahrrichtung VR3 anheben und absenken. Die Hubmittel 19 sind dabei vorzugsweise mittels einer mit der Transfervorrichtung 1 mitgeführten Energiequelle versorgt, so dass keine Energieverbindung zur Prozessvorrichtung 2 hergestellt werden muss. Zusätzlich oder alternativ können die Hubmittel 19 auch von einer externen Energiequelle mit Energie versorgt werden.

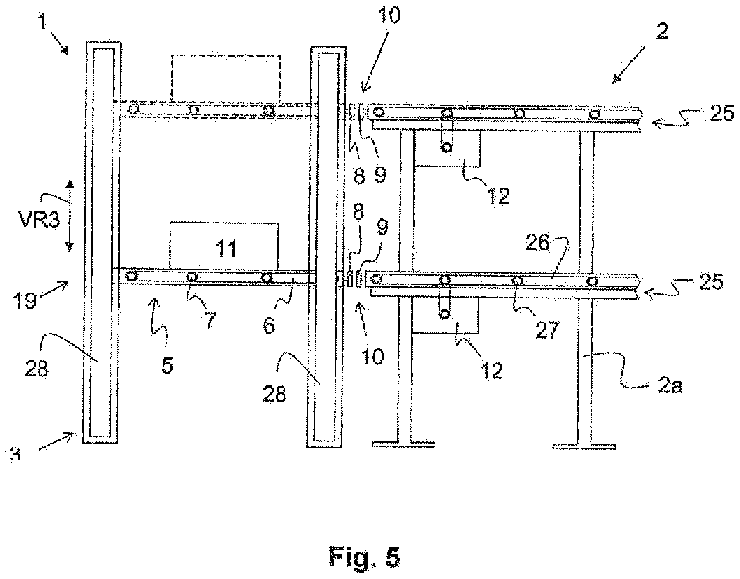

Das Ausführungsbeispiel gemäß der Figur 5 zeigt eine Transfervorrichtung 1, deren Grundgestell 3 mehrere vertikale Streben 28 aufweist, in denen die Fördereinrichtung 5 lagert und mittels Hubmitteln 19 vertikal verfahrbar ist. Hierzu greifen beispielsweise in den Streben 28 verlaufende Zugseile an den freien Enden der Fördereinrichtung 5 an. Mit den Zugseilen, die motorisch angetrieben werden (Antrieb nicht dargestellt) lässt sich die Fördereinrichtung 5 zwischen mehreren übereinander angeordneten Prozessvorrichtungen 2 anheben und absenken, um - nach Aktivieren der Magnetkupplung 10 an der jeweiligen Prozessvorrichtung 2 - Stückgüter 11 zu transferieren.

Bei einer nicht dargestellten Alternative wird die gesamte Transfervorrichtung 1 angehoben, d.h. mitsamt dem Grundgestell 3 und der Fördereinrichtung 5.

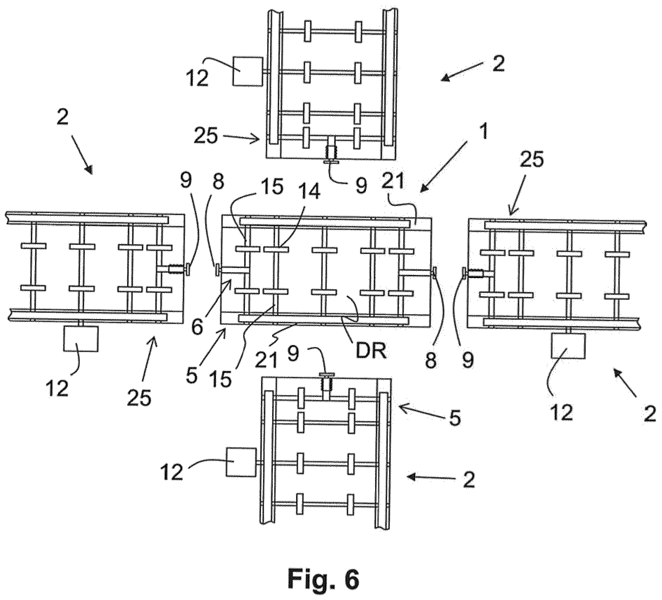

In der Figur 6 ist schließlich ein Ausführungsbeispiel eines erfindungsgemäßen Systems mit einem als Transfervorrichtung 1 ausgebildeten Drehtisch dargestellt, der gemäß diesem Beispiel zentral in Bezug auf vier um diesen Drehtisch herum stationär aufgestellten Prozessvorrichtungen 2 angeordnet ist. Jede dieser Prozessvorrichtungen 2 ist vorliegend dazu ausgebildet, Stückgüter 11 an die Transfervorrichtung 1 abzugeben oder von dieser aufzunehmen, nachdem eine der beiden sich gegenüberliegenden Abtriebselemente 8 mit einem Antriebselement 9 einer der Prozessvorrichtungen 2 eine Magnetkupplung 10 gebildet hat. Nach beispielsweise einer Förderung eines oder mehrerer Stückgüter 11 auf die Transfervorrichtung 1 wird deren Fördereinrichtung 5 auf dem als Sockel dienenden, vorzugsweise stationären, Grundgestell 3 (in der Draufsicht verdeckt) um 90° oder 180° in oder gegen den Uhrzeigersinn in einer Drehrichtung DR um eine Vertikalachse gedreht, um das oder die Stückgüter 11 an eine andere Prozessvorrichtung 2 - wieder unter Bildung einer Magnetkupplung - abzugeben. In der vereinfachten Darstellung gemäß der Figur 6 sind die Ab- und Antriebselemente 8, 9 der Übersichtlichkeit halber mit Abstand zueinander eingezeichnet. Es ist aber zu betonen, dass sowohl die Bildung der möglichen verschiedenen Magnetkupplungen 10 als auch die Drehbarkeit der Transfervorrichtung 1 ohne gegenseitige Behinderung von einzelnen Teilen selbstverständlich möglich ist. Hierzu können beispielsweise das Abtriebselement 8 und/oder das Antriebselement 9 teleskopierbar ausgestaltet sein, um den gegenseitigen Abstand zu verringern. Generell ist es vorteilhaft, das Abtriebselement 8 und/oder das Antriebselement 9 linear verschieblich auszugestalten, um diese beiden Elemente 8, 9 zur Ermöglichung der besagten Magnetkupplung 10 näher aneinander zu bringen, so dass diese dann formschlüssig ineinander greifen.

Wie der Figur 6 weiterhin zu entnehmen ist, sind bei der dargestellten Ausführungsform die Ab- und Antriebselemente 8, 9 in Bezug auf die seitlichen Außenflanken der Transfervorrichtung 1 bzw. der Prozessvorrichtungen 2 mittig angeordnet. Nach Herstellen einer Magnetkupplung 10 wird hier vorzugsweise die vorderste Welle 15 der Transfervorrichtung 1, die vorliegend Teil der Kraftübertragungsmittel 6 ist, angetrieben. Diese Rotationsenergie wird beispielsweise über an den besagten Längsprofilen 21 angeordnete Treibriemen, die mit den Stirnseiten dieser Welle 15 verbunden sind und ebenfalls Teil der Kraftübertragungsmittel 6 sind, an die jeweils dahinter liegenden Fördermittel 7, die auch hier als Rollenförderer mit Förderrollen ausgebildet sind, übertragen.

Prinzipiell wäre es auch möglich, an der Transfervorrichtung 1 lediglich ein einziges Abtriebselement 8 vorzusehen. Bei bestimmten Transfervorgängen von Stückgütern 11 muss dann die Transfervorrichtung 1 um 270° gedreht werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind. Beispielsweise kann statt einer Elektromagnetkupplung bei entsprechender Ausbildung von Antriebselement 9 und Abtriebselement 8 auch eine Permanentmagnetkupplung eingesetzt werden.

### Bezugszeichenliste

- 1: Transfervorrichtung
- 2: Prozessvorrichtung
- 2a: Gestell der Prozessvorrichtung
- 3: Grundgestell
- 4: Rollen
- 5: Fördereinrichtung
- 5a: Lager für Fördermittel
- 6: Kraftübertragungsmittel
- 7: Fördermittel
- 8: Abtriebselement
- 9: Antriebselement
- 10: Magnetkupplung
- 11: Stückgut
- 11a: Werkstück
- 12: Antriebseinheit
- 13: Elektromagnet
- 14: Förderrollen
- 15: Welle
- 16: Transporteinrichtung
- 17: Schienen
- 18: Verfahreinrichtung
- 19: Hubmittel
- 20a,b: Transportebene
- 21: Längsprofile
- 22: Positioniergestell
- 22a,b: Begrenzungen
- 22c: Einfahröffnung
- 25: Fördereinrichtung der Prozessvorrichtung
- 25a: Lager für Fördermittel
- 26: Kraftübertragungsmittel
- 27: Fördermittel
- 28: Streben
- TR1: Transportrichtung
- VR2: Verfahrrichtung
- VR3: Verfahrrichtung
- DR: Drehrichtung

## Patentansprüche

1. Transfervorrichtung zum Koppeln an eine Prozessvorrichtung (2), insbesondere an eine stationäre Förder- und/oder an eine Verarbeitungsstation und/oder an eine weitere Transfervorrichtung, zum Zwecke des Ein- und/oder Ausschleusens von Stückgütern (11), insbesondere von Werkstücken und/oder von Werkstückträgern, wobei die Transfervorrichtung (1) ein Grundgestell (3) sowie mindestens eine vom Grundgestell (3) getragene Fördereinrichtung (5) umfasst, welche Kraftübertragungsmittel (6) sowie von den Kraftübertragungsmitteln (6) angetriebene Fördermittel (7) aufweist, um Stückgüter (11) an die bzw. von der besagten Prozessvorrichtung (2) übergeben bzw. empfangen zu können,
wobei die mindestens eine Fördereinrichtung (5) ortsveränderlich positionierbar zum reversiblen Zustellen der Transfervorrichtung (1) an die Prozessvorrichtung (2) ausgebildet ist,
wobei
die mindestens eine Fördereinrichtung (5) mindestens ein Abtriebselement (8) einer Magnetkupplung (10) aufweist und zum reversiblen Ankuppeln der Transfervorrichtung (1) an ein korrespondierendes, an der besagten Prozessvorrichtung (2) vorgesehenes Antriebselement (9) der besagten Magnetkupplung (10) ausgebildet ist, wobei die besagte Magnetkupplung (10) bei miteinander gekoppeltem Ab- und Antriebselement (8, 9) eine Kraftübertragung von einer Antriebseinheit (12) der Prozessvorrichtung (2) an die Kraftübertragungsmittel (6) der mindestens einen Fördereinrichtung (5) bewirkt.

2. Transfervorrichtung nach Anspruch 1, **dadurch gekennzeichnet, dass** das Grundgestell und die mindestens eine Fördereinrichtung wie folgt ausgebildet sind:
- das Grundgestell (3) ist zusammen mit der mindestens einen Fördereinrichtung (5) ortsveränderlich positionierbar ausgebildet; und/oder
- das Grundgestell (3) ist zusammen mit der mindestens einen Fördereinrichtung (5) verfahrbar, vorzugsweise linear verfahrbar, ausgebildet insbesondere mittels Rollen (4), Rädern, Ketten oder Kufen; und/oder
- das Grundgestell (3) ist zusammen mit der mindestens einen Fördereinrichtung (5) drehbar ausgebildet, vorzugsweise um eine vertikale Drehachse.

3. Transfervorrichtung nach Anspruch 1, **dadurch gekennzeichnet, dass** das Grundgestell (3) ortsfest angeordnet ist und dass die mindestens eine Fördereinrichtung (5) relativ zum Grundgestell (3) verfahrbar und/oder drehbar ausgebildet ist.

4. Transfervorrichtung nach dem vorhergehenden Anspruch, **dadurch gekennzeichnet, dass** die mindestens eine Fördereinrichtung (5) in der Höhe verfahrbar ausgebildet ist, wobei vorzugsweise Hubmittel (19) vorgesehen sind, mittels denen die mindestens eine Fördereinrichtung (5) in der Höhe verfahrbar ist, insbesondere von einer Transportebene (20a, 20b) der Prozessvorrichtung (2) zu einer anderen Transportebene (20b, 20a) der gleichen oder einer anderen Prozessvorrichtung (2), wobei die Hubmittel (19) vorzugsweise mit der besagten Magnetkupplung (10) und/oder einer zusätzlichen Magnetkupplung verbunden sind und von der Antriebseinheit (12) der Prozessvorrichtung (2) antreibbar ausgestaltet sind.

5. Transfervorrichtung nach mindestens einem der vorhergehenden Ansprüche, **dadurch gekennzeichnet, dass** die Magnetkupplung (10) als Elektromagnetkupplung oder als Permanentmagnetkupplung ausgebildet ist.

6. Transfervorrichtung nach mindestens einem der vorhergehenden Ansprüche, **dadurch gekennzeichnet, dass** die Fördermittel (7) sich zwischen zwei Längsprofilen (21) erstrecken, wobei an einem Ende eines der beiden Längsprofile (21) das mindestens eine Abtriebselement (8) vorgesehen ist.

7. Transfervorrichtung nach mindestens einem der vorhergehenden Ansprüche, **dadurch gekennzeichnet, dass** die mindestens eine Fördereinrichtung (5) ausgewählt ist aus der Gruppe, die folgende Stetigförderer umfasst:
- Rollenförderer, deren Förderrollen (14) als Fördermittel (7) dienen, welche über die Magnetkupplung (10) und die Kraftübertragungsmittel (6) antreibbar sind;
- Kettenförderer,
- Gurtförderer,
- Modulbandförderer,
- Zahnriemenförderer, und/oder
- Scharnierbandförderer.

8. Transfervorrichtung nach mindestens einem der vorhergehenden Ansprüche, **dadurch gekennzeichnet, dass** die mindestens eine Fördereinrichtung (5) mindestens ein in Förderrichtung verlaufendes Längsprofil (21) aufweist, an dem ein mechanisches Kraftübertragungsmittel (6) für die Fördermittel (7), beispielsweise Förderrollen (14) umfassend, verläuft, und dass an zumindest einem Ende dieses Längsprofils (21) das mindestens eine Abtriebselement (8) angeordnet ist.

9. Transfervorrichtung nach mindestens einem der vorhergehenden Ansprüche, **dadurch gekennzeichnet, dass** die Kraftübertragungsmittel (6) zumindest eine Antriebsstange, eine Kette und/oder einen Treibriemen, beispielsweise in Form eines Zahnriemens oder Keilriemens, umfassen, die/der sich durch die Magnetkupplung (10) in Rotation versetzen lässt und welche/r hierbei die Fördermittel (7), beispielsweise die Stirnseiten von mit Förderrollen (14) verbundenen Wellen (15), kraft- oder formschlüssig antreibt.

10. Transfervorrichtung nach mindestens einem der vorhergehenden Ansprüche, **dadurch gekennzeichnet, dass** die Fördereinrichtung (5) einen Rollenförderer umfasst, wobei entweder alle dessen Förderrollen (14) mit den mit der Magnetkupplung (10) verbundenen Kraftübertragungsmitteln (6) direkt antreibbar sind, oder mindestens eine über die Kraftübertragungsmittel (6) antreibbare Welle (15) vorgesehen ist und andere Wellen (15) mit darauf angeordneten Förderrollen (14) mit einem Riemen- oder Kettenübertrieb mit der besagten mindestens einen Welle (15) verbunden sind.

11. System, umfassend mindestens eine Transfervorrichtung (1) nach mindestens einem der vorhergehenden Ansprüche, zum Zwecke des Ein- und/oder Ausschleusens von Stückgütern (11), insbesondere Werkstücken (11a) und/oder Werkstückträgern, sowie zumindest eine Prozessvorrichtung (2), insbesondere eine stationäre Förder- und/oder Verarbeitungsstation, wobei die Transfervorrichtung (1) mindestens ein Abtriebselement (8) aufweist, dessen dazu korrespondierender Teil ein Antriebselement (9) umfasst, das an der Prozessvorrichtung (2) angeordnet ist, und das Abtriebs- und das Antriebselement (8, 9) im miteinander gekoppelten Zustand eine Magnetkupplung (10) ausbilden, so dass mittels der Magnetkupplung (10) eine Kraftübertragung von einer Antriebseinheit (12) der Prozessvorrichtung (2) an die Kraftübertragungsmittel (6) der mindestens einen Fördereinrichtung (5) ermöglicht ist.

12. System nach Anspruch 11, **dadurch gekennzeichnet, dass** das System ein Positioniergestell (22) zum Positionieren der Transfervorrichtung (1) an der Prozessvorrichtung (2) umfasst, wobei das Positioniergestell (22) bevorzugt eine Einfahröffnung (22c) sowie seitliche Begrenzungen (22a) und eine der Einfahröffnung (22c) gegenüber liegende und der Prozessvorrichtung (2) benachbarte Begrenzung (22b) aufweist, wobei das Positioniergestell (22) vorzugsweise ortsfest an oder bei der Prozessvorrichtung (2) angeordnet ist, beispielsweise durch bodenseitige Verschraubung.

13. System nach mindestens einem der vorhergehenden Systemansprüche, **dadurch gekennzeichnet, dass** die mindestens eine Fördereinrichtung (5) der Transfervorrichtung (1) und eine Fördereinrichtung (25) der Prozessvorrichtung (2) miteinander in Flucht bringbare Fördermittel (7), beispielsweise die Förderrollen (14) eines Rollenförderers, aufweisen.

14. System nach mindestens einem der vorhergehenden Systemansprüche, **dadurch gekennzeichnet, dass** das System eine Transporteinrichtung (16), insbesondere Rollen, Schienen (17), Kufen und/oder Räder aufweisend, umfasst, mittels der die gesamte Transfervorrichtung (1) oder zumindest die Fördereinrichtung (5), mittels einer elektronischen Steuerung zwischen verschiedenen Prozessvorrichtungen (2) und/oder zu einer weiteren Einrichtung ortsveränderlich positionierbar ausgebildet ist, wobei die Transporteinrichtung (16) bevorzugt eine Verfahreinrichtung (18) für die Transfervorrichtung (1), vorzugsweise umfassend Zahnriemen, Zahnstangen, einen Reibradantrieb und/oder Zugseile, aufweist und/oder wobei die Transfervorrichtung (1) bevorzugt einen eigenen Antrieb aufweist, so dass die Transfervorrichtung (1) in der Transporteinrichtung (16) verfahrbar ausgebildet ist.

15. System nach dem vorhergehenden Systemanspruch, **dadurch gekennzeichnet, dass** die Transporteinrichtung (16) vertikal verlaufend angeordnet und derart ausgebildet ist, dass die Transfereinrichtung (1) mittels einer Verfahreinrichtung (18) und/oder mit einem eigenen Antrieb vertikal verfahrbar ist und somit Stückgüter (11) an bzw. von auf unterschiedlich hoch angeordneten Transportebenen (20a, 20b) dergleichen oder unterschiedlicher Prozessvorrichtungen (2) übergeben bzw. empfangen kann.

## Claims

1. A transfer device for coupling to a process device (2), in particular, to a stationary conveying station and/or to a processing station and/or to a further transfer device, for the purpose of introducing and/or removing articles (11), in particular workpieces and/or workpiece carriers, wherein the transfer device (1) comprises a basic frame (3) and at least one conveying unit (5) which is supported by the basic frame (3) and includes force transmission means (6) as well as conveying means (7), driven by the force transmission means (6), in order to be able to transfer or receive articles (11) to or from said process device (2),
wherein the at least one conveying unit (5) is designed to be movably positionable in order for the transfer device (1) to be reversibly advanced up to the process device (2),
wherein the at least one conveying unit (5) comprises at least one output element (8) of a magnetic coupling (10) and is designed for reversibly coupling the transfer device (1) to a corresponding drive element (9) of the magnetic coupling (10), the drive element (9) being provided on said process device (2), wherein, when the drive element (9) and the output element (8) are coupled to one another, said magnetic coupling (10) effectuates a force transmission from a drive unit (12) of the process device (2) to the force transmission means (6) of the at least one conveying unit (5).

2. The transfer device as claimed in claim 1, **characterized in that** the basic frame and the at least one conveying unit (5) are designed as follows:
- the basic frame (3) is designed to be movably positionable together with the at least one conveying unit (5); and/or
- the basic frame (3), together with the at least one conveying unit (5), is designed to be displaceable, preferably linearly displaceable, in particular with the aid of rollers (4), wheels, chains, or runners; and/or
- the basic frame (3) is designed to be rotatable, preferably about a vertical rotational axis, together with the at least one conveying unit (5).

3. The transfer device as claimed in claim 1, **characterized in that** the basic frame (3) is fixedly situated and the at least one conveying unit (5) is designed to be displaceable and/or rotatable relative to the basic frame (3).

4. The transfer device as claimed in the preceding claim, **characterized in that** the at least one conveying unit (5) is designed to be vertically displaceable, wherein lifting means (19) are preferably provided, with the aid of which the at least one conveying unit (5) is vertically displaceable, in particular from one transport level (20a, 20b) of the process device (2) to another transport level (20b, 20a) of the same or another process device (2), wherein the lifting means (19) are preferably connected to said magnetic coupling (10) and/or an additional magnetic coupling and are designed to be driven by the drive unit (12) of the process device (2).

5. The transfer device as claimed in at least one of the preceding claims, **characterized in that** the magnetic coupling (10) is designed as an electromagnetic coupling or is designed as a permanent magnet coupling.

6. The transfer device as claimed in at least one of the preceding claims, **characterized in that** the conveying means (7) extend between two longitudinal profiles (21), wherein the at least one output element (8) is provided at one end of one of the two longitudinal profiles (21).

7. The transfer device as claimed in at least one of the preceding claims, **characterized in that** the at least one conveying unit (5) is selected from the group which includes the following continuous conveyors:
- roller conveyors, the conveying rollers (14) of which function as conveying means (7) which can be driven via the magnetic coupling (10) and the force transmission means (6);
- chain conveyors,
- belt conveyors,
- modular belt conveyors,
- toothed belt conveyors, and/or
- slat-band chain conveyors.

8. The transfer device as claimed in at least one of the preceding claims, **characterized in that** the at least one conveying unit (5) comprises at least one longitudinal profile (21) extending in the conveying direction, on which a mechanical force transmission means (6) for the conveying means (7), for example, including conveying rollers (14), extends, and the at least one output element (8) is situated on at least one end of this longitudinal profile (21).

9. The transfer device as claimed in at least one of the preceding claims, **characterized in that** the force transmission means (6) comprise at least one drive rod, a chain, and/or a drive belt, for example, in the form of a toothed belt or V-belt, which can be set into rotation via the magnetic coupling (10) and which thereby drive the conveying means (7), for example, the end faces of shafts (15) connected to conveying rollers (14), in a force-locked or form-locked manner.

10. The transfer device as claimed in at least one of the preceding claims, **characterized in that** the conveying unit (5) comprises a roller conveyor, wherein either all of its conveying rollers (14) can be driven directly with the aid of the force transmission means (6) connected to the magnetic coupling (10), or at least one shaft (15) is provided, which can be driven via the force transmission means (6), and other shafts (15) are connected to said at least one shaft (15) via a belt or chain overdrive.

11. A system, comprising at least one transfer device (1) as claimed in at least one of the preceding claims, for the purpose of introducing and/or removing articles (11), in particular workpieces (11a) and/or workpiece carriers, and at least one process device (2), in particular a stationary conveying station and/or processing station, wherein the transfer device (1) comprises at least one output element (8), the corresponding part of which includes a drive element (9) which is situated on the process device (2), and the output element (8) and the drive element (9), in the state in which they are coupled to one another, form a magnetic coupling (10), and so, with the aid of the magnetic coupling (10), a force transmission from a drive unit (12) of the process device (2) to the force transmission means (6) of the at least one conveying unit (5) is made possible.

12. The system as claimed in claim 11, **characterized in that** the system comprises a positioning frame (22) for positioning the transfer device (1) at the process device (2), wherein the positioning frame (22) preferably comprises an entry opening (22c) as well as lateral boundaries (22a) and a boundary (22b) positioned opposite the entry opening (22c) and adjacent to the process device (2), wherein the positioning frame (22) is preferably fixedly situated at or near the process device (2), for example, with the aid of bottom-side screw connections.

13. The system as claimed in at least one of the preceding system claims, **characterized in that** the at least one conveying unit (5) of the transfer device (1) and a conveying unit (25) of the process device (2) comprise conveying means (7), for example, the conveying rollers (14) of a roller conveyor, wherein said conveying means (7) can be brought into alignment with one another.

14. The system as claimed in at least one of the preceding system claims, **characterized in that** the system comprises a transport unit (16), in particular including rollers, rails (17), runners, and/or wheels, with the aid of which the entire transfer device (1) or at least the conveying unit (5) is designed to be movably positionable, with the aid of an electronic controller, between various process devices (2) and/or to a further unit, wherein the transport unit (16) preferably comprises a displacement unit (18) for the transfer device (1), in particular including toothed belts, toothed bars, a friction wheel drive, and/or traction cables, and/or wherein the transfer device (1) comprises a separate drive such that the transfer device (1) is designed to be moveable in the transport unit (16).

15. The system as claimed in the preceding system claim, **characterized in that** the transport unit (16) is situated so as to extend vertically and is designed in such a way that the transfer device (1) can be vertically displaced with the aid of a displacement unit (18) and/or with the aid of a separate drive and, therefore, can transfer and/or receive articles (11) to or from transport levels (20a, 20b), which are situated at different heights, of the same or different process devices (2).

## Revendications

1. Dispositif de transfert destiné à être couplé à un dispositif de traitement (2), en particulier à une station de transport stationnaire et/ou à une station de traitement et/ou à un autre dispositif de transfert, dans le but d'introduire et/ou d'évacuer des articles en vrac (11), en particulier des pièces à usiner et/ou des porte-pièces, dans lequel le dispositif de transfert (1) comprend un châssis de base (3) ainsi qu'au moins un dispositif de transport (5) porté par le châssis de base (3), lequel dispositif de transport présente des moyens de transmission de force (6) ainsi que des moyens de transport (7) entraînés par les moyens de transmission de force (6), afin de pouvoir transférer vers ou recevoir depuis ledit dispositif de traitement (2) des articles en vrac (11),
dans lequel l'au moins un dispositif de transport (5) est réalisé de manière positionnable mobile pour l'amenée réversible du dispositif de transfert (1) au dispositif de traitement (2),
dans lequel l'au moins un dispositif de transport (5) comprend au moins un élément entraîné (8) d'un accouplement magnétique (10) et est conçu pour coupler de manière réversible le dispositif de transfert (1) à un élément d'entraînement correspondant (9) dudit accouplement magnétique (10) prévu sur ledit dispositif de traitement (2), ledit accouplement magnétique (10), lorsque les éléments entraîné et d'entraînement (8, 9) sont couplés l'un à l'autre, provoque une transmission de force d'une unité d'entraînement (12) du dispositif de traitement (2) aux moyens de transmission de force (6) de l'au moins un dispositif de transport (5).

2. Dispositif de transfert selon la revendication 1, **caractérisé en ce que** le châssis de base et le, au moins un, dispositif de transport sont conçus comme suit :
- le châssis de base (3) est réalisé de manière positionnable mobile avec le, au moins un, dispositif de transport (5) ; et/ou
- le châssis de base (3) est réalisé de manière déplaçable conjointement avec le, au moins un, dispositif de transport (5), de préférence déplaçable de manière linéaire, en particulier au moyen de rouleaux (4), de roues, de chaînes ou de patins ; et/ou
- le châssis de base (3) est réalisé de manière rotative avec le, au moins un, dispositif de transport (5), de préférence autour d'un axe de rotation vertical.

3. Dispositif de transfert selon la revendication 1, **caractérisé en ce que** le châssis de base (3) est disposé de manière stationnaire et **en ce que** le, au moins un, dispositif de transport (5) est réalisé de manière déplaçable et/ou rotative par rapport au châssis de base (3).

4. Dispositif de transfert selon la revendication précédente, **caractérisé en ce que** le, au moins un, dispositif de transport (5) est conçu de manière déplaçable en hauteur, des moyens de levage (19) étant de préférence prévus, au moyen desquels le, au moins un, dispositif de transport (5) peut être déplacé en hauteur, en particulier depuis un plan de transport (20a, 20b) du dispositif de traitement (2) à un autre plan de transport (20b, 20a) du même ou d'un autre dispositif de traitement (2), les moyens de levage (19) étant de préférence reliés audit accouplement magnétique (10) et/ou à un accouplement magnétique supplémentaire et étant conçus de manière à pouvoir être entraînés par l'unité d'entraînement (12) du dispositif de traitement (2).

5. Dispositif de transfert selon au moins l'une des revendications précédentes, **caractérisé en ce que** l'accouplement magnétique (10) est conçu en tant qu'accouplement électromagnétique ou en tant qu'accouplement à aimants permanents.

6. Dispositif de transfert selon au moins l'une des revendications précédentes, **caractérisé en ce que** les moyens de transport (7) s'étendent entre deux profilés longitudinaux (21), dans lequel l'au moins un élément entraîné (8) est prévu à une extrémité de l'un des deux profilés longitudinaux (21).

7. Dispositif de transfert selon au moins l'une des revendications précédentes, **caractérisé en ce que** le, au moins un, dispositif de transport (5) est choisi dans le groupe comprenant les transporteurs continus suivants :
- transporteurs à rouleaux dont les rouleaux de transport (14) servent de moyens de transport (7) qui peuvent être entraînés via l'accouplement magnétique (10) et les moyens de transmission de force (6) ;
- transporteurs à chaîne,
- transporteurs à courroie,
- convoyeurs à bandes modulaires,
- transporteurs à courroies dentées et/ou
- convoyeurs à chaînes à charnières.

8. Dispositif de transfert selon au moins l'une des revendications précédentes, **caractérisé en ce que** le, au moins un, dispositif de transport (5) présente au moins un profilé longitudinal (21) s'étendant dans la direction de transport, sur lequel s'étend un moyen de transmission de force (6) mécanique pour les moyens de transport (7), comprenant par exemple des rouleaux de transport (14), et **en ce que** le, au moins un, élément entraîné (8) est disposé à au moins une extrémité de ce profilé longitudinal (21).

9. Dispositif de transfert selon au moins l'une des revendications précédentes, **caractérisé en ce que** les moyens de transmission de force (6) comprennent au moins une tige d'entraînement, une chaîne et/ou une courroie d'entraînement, par exemple sous la forme d'une courroie crantée ou d'une courroie trapézoïdale, qui peut être entraîné(e) en rotation par l'accouplement magnétique (10) et qui entraîne alors les moyens de transport (7), par exemple les faces frontales d'arbres (15) reliés à des rouleaux de transport (14), par friction ou par clabotage.

10. Dispositif de transfert selon au moins l'une des revendications précédentes, **caractérisé en ce que** le dispositif de transport (5) comprend un transporteur à rouleaux, dans lequel soit tous ses rouleaux de transport (14) peuvent être entraînés directement par les moyens de transmission de force (6) reliés à l'accouplement magnétique (10), soit il est prévu au moins un arbre (15) pouvant être entraîné par les moyens de transmission de force (6) et d'autres arbres (15) avec des rouleaux de transport (14) disposés sur ceux-ci sont reliés audit, au moins un, arbre (15) par une transmission par courroie ou par chaîne.

11. Système comprenant au moins un dispositif de transfert (1) selon au moins l'une des revendications précédentes, dans le but d'introduire et/ou d'évacuer des articles en vrac (11), en particulier des pièces à usiner (11a) et/ou des porte-pièces, ainsi qu'au moins un dispositif de traitement (2), en particulier une station de transport et/ou de traitement stationnaire, dans lequel le dispositif de transfert (1) présente au moins un élément entraîné (8) dont la partie correspondante comprend un élément d'entraînement (9) qui est disposé sur le dispositif de traitement (2), et l'élément entraîné et l'élément d'entraînement (8, 9) forment, à l'état couplé l'un à l'autre, un accouplement magnétique (10), de sorte qu'une transmission de force depuis une unité d'entraînement (12) du dispositif de traitement (2) aux moyens de transmission de force (6) de l'au moins un dispositif de transport (5) est possible au moyen de l'accouplement magnétique (10).

12. Système selon la revendication 11, **caractérisé en ce que** le système comprend un châssis de positionnement (22) pour positionner le dispositif de transfert (1) au dispositif de traitement (2), dans lequel le châssis de positionnement (22) présente de préférence une ouverture d'entrée (22c) ainsi que des limitations latérales (22a) et une limitation (22b) faisant face à l'ouverture d'entrée (22c) et adjacente au dispositif de traitement (2), dans lequel le châssis de positionnement (22) est de préférence disposé de manière stationnaire sur ou près du dispositif de traitement (2), par exemple par boulonnage côté sol.

13. Système selon au moins l'une des revendications de système précédentes, **caractérisé en ce que** le, au moins un, dispositif de transport (5) du dispositif de transfert (1) et un dispositif de transport (25) du dispositif de traitement (2) présentent des moyens de transport (7) pouvant être alignés les uns avec les autre, par exemple les rouleaux de transport (14) d'un transporteur à rouleaux.

14. Système selon au moins l'une des revendications de système précédentes, **caractérisé en ce que** le système comprend un dispositif de transport (16), présentant en particulier des rouleaux, des rails (17), des patins et/ou des roues, au moyen duquel l'ensemble du dispositif de transfert (1) ou au moins le dispositif de transport (5) est réalisé de manière positionnable mobile au moyen d'une commande électronique entre différents dispositifs de traitement (2) et/ou vers un autre dispositif, dans lequel le dispositif de transport (16) présente de préférence un dispositif de déplacement (18) pour le dispositif de transfert (1), comportant de préférence des courroies crantées, des crémaillères, un entraînement par roue à friction et/ou des câbles de traction, et/ou dans lequel le dispositif de transfert (1) présente de préférence un entraînement propre, de sorte que le dispositif de transfert (1) est réalisé de manière déplaçable dans le dispositif de transport (16).

15. Système selon la revendication de système précédente, **caractérisé en ce que** le dispositif de transport (16) est disposé avec une étendue verticale et est réalisé de sorte que le dispositif de transfert (1) est déplaçable verticalement au moyen d'un dispositif de déplacement (18) et/ou avec son propre entraînement et peut ainsi transférer ou recevoir des articles en vrac (11) vers ou depuis des plans de transport (20a, 20b) disposés à des hauteurs différentes des mêmes dispositifs de traitement (2) ou de dispositifs de traitement différents.
